# EUROPEAN PATENT SPECIFICATION

(11) **EP 3 702 207 B1**
(45) Date of publication and mention of the grant of the patent: **05.02.2025**
(21) Application number: 18902106.6
(22) Date of filing: 15.12.2018
(51) Int. Cl.: B60N 2/26, B60N 2/28

(54) **TOP TETHER STRAP STRUCTURE**
TOP-TETHER-GURTSTRUKTUR
STRUCTURE DE SANGLE D'ATTACHE SUPÉRIEURE

(30) Priority: 29.01.2018 CN 201820141676 U
(43) Date of publication of application: 02.09.2020
(73) Proprietor: Max-Inf (Ningbo) Baby Product Co., Ltd, Ningbo, Zhejiang 315100 (CN)
(72) Inventor: XU, Lihong, Ningbo, Zhejiang 315100 (CN); GUO, Yaya, Ningbo, Zhejiang 315100 (CN)
(74) Representative: Ipside
(86) International application number: PCT/CN2018/121351
(87) International publication number: WO 2019/144729

(56) References cited:
- EP-A2- 1 468 868
- CN-U- 203 698 007
- CN-U- 204 978 307
- CN-U- 205 553 968
- CN-U- 206 067 562
- CN-U- 207 931 541
- FR-A1- 2 946 582
- US-A1- 2005 280 297
- US-A1- 2011 193 394

## Description

### Technical Field

The present invention relates to the technical field of safety seats, and in particular to an intelligent top tether strap structure.

### Background of the Invention

A lower half of a safety seat is usually fixed to a seat of a car by means of an isofix hard interface, and an upper half of the safety seat is fittingly connected to a top tether strap interface of the car by means of a structure of a top tether strap and a buckle.

Whether the upper half of the safety seat is installed in place is usually reflected by the tension of the top tether strap. If the tension force of the top tether strap reaches a limit value, the upper half of the safety seat has been installed in place.

At present, the tension of the top tether strap is reflected by the change in color, which needs to be determined by a naked eye. The failure in accurate determination often occurs due to low light or other causes. Therefore, for the safety of children, improvement is made to the above structure.

Patent document US 20050280297 A1 is a technical background of the present invention, and concerns a child seat adapted for use in a vehicle, with an adjustable tether secured to a shell portion of the seat, and an electronic control unit providing an output indicating whether the tension of the adjustable tether is within a predetermined range of acceptable tension.

Utility model CN 206 067 562 U shows a top tether strap structure of the state of the art which forms the basis for the preamble of the independent claim.

### Summary of the Invention

In view of the drawbacks in the prior art, the present invention provides an intelligent top tether strap structure. By means of intellectualization, when the tension force of the top tether strap reaches a limit value, a connecting member contacts a switch, and then a prompt tone is made to remind a user that the top tether strap has been tightened. The structure is simple, the determination mode is direct, and potential safety hazards caused by improper installation of a safety seat are eliminated.

The above technical problem is solved by the following technical solution of the present invention: a top tether strap structure, comprising
a fixing member fittingly connected to a safety seat body;
a connecting member, a top tether strap and a buckle, wherein one end of the top tether strap is connected to the buckle, and the other end passes through the fixing member and is then connected to the connecting member;
a switch disposed on the fixing member, wherein when the buckle pulls the top tether strap to allow the connecting member to move to a set position, the connecting member abuts against the switch; and
a reminder device electrically connected to the switch.

In the above technical solution, preferably, the fixing member is provided with a first elastic member for cooperating with the connecting member, and when a force of pulling the top tether strap reaches a set value, the connecting member abuts against the switch.

In the above technical solution, preferably, the fixing member is provided with a guide member, and the connecting member is fittingly connected to the guide member.

In the above technical solution, preferably, the fixing member is further provided with a second elastic member, and the second elastic member abuts against and presses the connecting member under an external force.

In the above technical solution, preferably, the reminder device is a sounding device.

In the above technical solution, preferably, the fixing member is further fittingly provided with a cover plate.

The beneficial effects of the present invention lie in that: by means of intellectualization, when the tension force of the top tether strap reaches a limit value, the connecting member contacts the switch, and then a prompt tone is made to remind a user that the top tether strap has been tightened. The structure is simple, the determination mode is direct, and potential safety hazards caused by improper installation of a safety seat are eliminated.

### Brief Description of the Drawings

Fig. 1 is an exploded view of the present invention.
Fig. 2 is a schematic view of the use state of a top tether strap of the present invention in a forward travelling mode.
Fig. 3 is a schematic view of the use state of the top tether strap of the present invention in a reverse travelling mode.

### Detailed Description of Embodiments

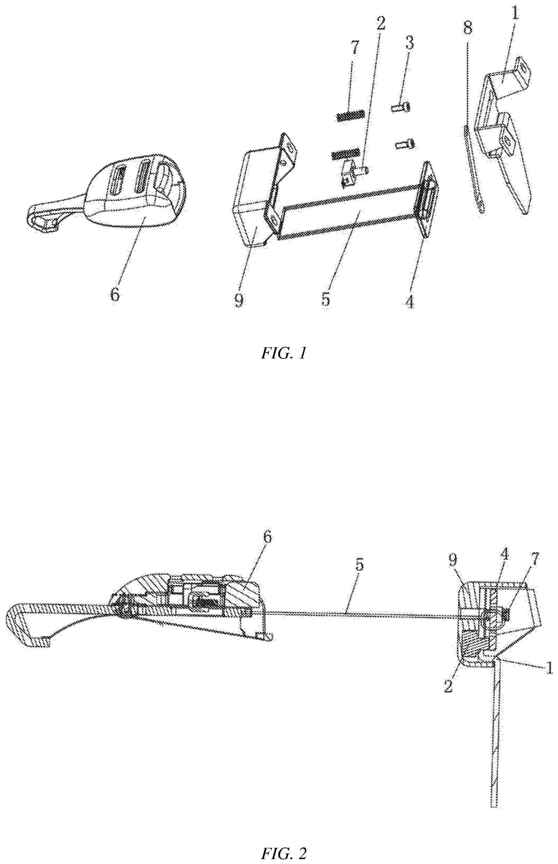

The present invention will be described in further detail below with reference to the drawings and specific embodiments. Referring to Fig. 1, an intelligent top tether strap structure comprises a fixing member 1, a switch 2, a guide member 3, a connecting member 4, a top tether strap 5, a buckle 6, a first elastic member 7, a second elastic member 8, a reminder device and a cover plate 9.

One end of the top tether strap is connected to the buckle, the other end passes through the fixing member and is then connected to the connecting member, and the switch is located below the side of the top tether strap that is connected to the connecting member. The fixing member 1 is fittingly connected to a safety seat body. The switch 2, the guide member 3 and the first elastic member 7 are all disposed on the fixing member 1. The switch 2 is electrically connected to the reminder device. The reminder device can be disposed at any position, provided that the reminder device can implement a reminding function after being disposed. The reminder device is a sounding device or a light-emitting device or other somatosensory reminder devices.

The connecting member 4 is fittingly connected to the guide member 3, and the guide member 3 has a guiding function to define the movement direction of the connecting member 4. The first elastic member 7 cooperates with the connecting member 4. When the connecting member 4 is pulled by the top tether strap 5, the first elastic member 7 provides a resilient force, such that the connecting member 4 abuts against the switch 2 when a force of pulling the top tether strap 5 reaches a set value or the connecting member moves to a set position. The first elastic member is preferably a spring.

The cover plate 9 is fittingly connected to the fixing member 1. By configuring the cover plate to fit with the fixing member, the connecting member is protected.

Referring to Fig. 2, when the top tether strap adopts a forward travelling mode, the connecting member is connected to the buckle by means of the top tether strap. The top tether strap is pulled, such that the connecting member is moved. When the pulling force reaches a certain extent or the connecting member moves to a set position, the connecting member will contact the switch, and then a reminding message is issued, indicating that the top tether strap has been tightened.

The fixing member 1 is further provided with a second elastic member 8, and the second elastic member 8 abuts against and presses the connecting member under an external force.

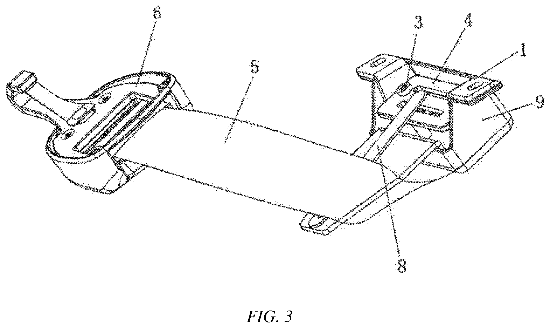

Referring to Fig. 3, when the top tether strap adopts a reverse travelling mode, the pulling force of the top tether strap on the connecting member cannot reach the limit value. Therefore, an additional action of the second elastic member is required to allow the tension force of the top tether strap to reach the limit value. In the case that the top tether strap is tensioned to apply a force to a fixing plate, when the buckle is pulled to allow the top tether strap to be tightened, the second elastic member will be subjected to a certain pressure, and when the pressure reaches the limit value, the second elastic member will be pressed against the connecting member, and may contact the switch after being compressed by a certain travel.

The above embodiments only intend to illustrate but not limit the technical solutions of the present invention. Although the present invention has been described in detail with reference to the foregoing embodiments, those of ordinary skill in the art should understand that the technical solutions cited in the foregoing embodiments may be modified, or some of the technical features are equivalently replaced; as long as the resulting structure belongs to the scope of protection which is defined by the appended claims.

## Claims

1. A top tether strap structure, comprising:
a fixing member (1) fittingly connectable to a safety seat body;
a connecting member (4), a top tether strap (5) and a buckle (6), wherein one end of the top tether strap is connected to the buckle, and the other end passes through the fixing member and is then connected to the connecting member;
**characterized in that** it further comprises:
a switch (2) disposed on the fixing member, wherein when the buckle pulls the top tether strap to allow the connecting member to move to a set position, the connecting member abuts against the switch; and
a reminder device electrically connected to the switch.

2. The top tether strap structure according to claim 1, **characterized in that** the fixing member (1) is provided with a first elastic member (7) for cooperating with the connecting member (4), and when a force of pulling the top tether strap (5) reaches a set value, the connecting member abuts against the switch (2).

3. The top tether strap structure according to claim 1 or 2, **characterized in that** the fixing member (1) is provided with a guide member (3), and the connecting member (4) is fittingly connected to the guide member.

4. The top tether strap structure according to claim 3, **characterized in that** the fixing member (1) is further provided with a second elastic member (8), and the second elastic member abuts against and presses the connecting member (4) under an external force.

5. The top tether strap structure according to claim 4, **characterized in that** the reminder device is a sounding device.

6. The top tether strap structure according to claim 5, **characterized in that** the fixing member is further fittingly provided with a cover plate.

## Patentansprüche

1. Obere Haltegurtstruktur, umfassend:
ein Befestigungselement (1), das mit einem Sicherheitssitzkörper passend verbunden werden kann;
ein Verbindungselement (4), einen oberen Haltegurt (5) und eine Schnalle (6), wobei ein Ende des oberen Haltegurts mit der Schnalle verbunden ist und das andere Ende durch das Befestigungselement verläuft und dann mit dem Verbindungselement verbunden ist;
**dadurch gekennzeichnet, dass** es ferner Folgendes umfasst:
einen Schalter (2), der an dem Befestigungselement angeordnet ist, wobei das Verbindungselement an dem Schalter anliegt, wenn die Schnalle an dem oberen Haltegurt zieht, um eine Bewegung des Verbindungselements in eine eingestellte Position zu ermöglichen; und
eine mit dem Schalter elektrisch verbundene Erinnerungsvorrichtung.

2. Obere Haltegurtstruktur nach Anspruch 1, **dadurch gekennzeichnet, dass** das Befestigungselement (1) mit einem ersten elastischen Element (7) zum Zusammenwirken mit dem Verbindungselement (4) bereitgestellt wird, und wenn eine Zugkraft des oberen Haltegurtes (5) einen eingestellten Wert erreicht, stößt das Verbindungselement gegen die Weiche (2).

3. Obere Haltegurtstruktur nach Anspruch 1 oder 2, **dadurch gekennzeichnet, dass** das Befestigungselement (1) mit einem Führungselement (3) bereitgestellt ist und das Verbindungselement (4) passend mit dem Führungselement verbunden ist.

4. Obere Haltegurtstruktur nach Anspruch 3, **dadurch gekennzeichnet, dass** das Befestigungselement (1) ferner mit einem zweiten elastischen Element (8) bereitgestellt ist und das zweite elastische Element unter einer äußeren Kraft gegen das Verbindungselement (4) stößt und dieses drückt.

5. Obere Haltegurtstruktur nach Anspruch 4, **dadurch gekennzeichnet, dass** die Erinnerungsvorrichtung eine akustische Vorrichtung ist.

6. Obere Haltegurtstruktur nach Anspruch 5, **dadurch gekennzeichnet, dass** das Befestigungselement ferner mit einer Abdeckplatte versehen ist.

## Revendications

1. Structure de sangle d'attache supérieure, comprenant :
un élément de fixation (1) pouvant être relié de manière ajustée à un corps de siège de sécurité ;
un élément de liaison (4), une sangle d'attache supérieure (5) et une boucle (6), dans laquelle une extrémité de la sangle d'attache supérieure est reliée à la boucle, et l'autre extrémité passe à travers l'élément de fixation et est ensuite reliée à l'élément de liaison ;
**caractérisée en ce qu'**elle comprend en outre :
un commutateur (2) disposé sur l'élément de fixation, dans laquelle lorsque la boucle tire la sangle d'attache supérieure pour permettre à l'élément de liaison de se déplacer vers une position définie, l'élément de liaison vient buter contre le commutateur ; et
un dispositif de rappel relié électriquement au commutateur.

2. Structure de sangle d'attache supérieure selon la revendication 1, **caractérisée en ce que** l'élément de fixation (1) est pourvu d'un premier élément élastique (7) destiné à coopérer avec l'élément de liaison (4), et lorsqu'une force de traction de la sangle d'attache supérieure (5) atteint une valeur définie, l'élément de liaison vient buter contre le commutateur (2).

3. Structure de sangle d'attache supérieure selon la revendication 1 ou 2, **caractérisée en ce que** l'élément de fixation (1) est pourvu d'un élément de guidage (3), et l'élément de liaison (4) est relié de manière ajustée à l'élément de guidage.

4. Structure de sangle d'attache supérieure selon la revendication 3, **caractérisée en ce que** l'élément de fixation (1) est en outre pourvu d'un deuxième élément élastique (8), et le deuxième élément élastique vient buter contre l'élément de liaison (4), et appuie sur celui-ci, sous l'effet d'une force externe.

5. Structure de sangle d'attache supérieure selon la revendication 4, **caractérisée en ce que** le dispositif de rappel est un dispositif sonore.

6. Structure de sangle d'attache supérieure selon la revendication 5, **caractérisée en ce que** l'élément de fixation est en outre pourvu de manière ajustée d'une plaque de recouvrement.
